Europäisches Patentamt

European Patent Office

Office européen des brevets

(11) Veröffentlichungsnummer: **0 218 850**
**A1**

## (12) EUROPÄISCHE PATENTANMELDUNG

(21) Anmeldenummer: 86111449.4

(22) Anmeldetag: 19.08.86

(51) Int. Cl.⁴: **B 29 C 47/92**
**G 05 D 5/03**

(30) Priorität: 25.09.85 DE 3534201
07.10.85 DE 3535784

(43) Veröffentlichungstag der Anmeldung:
22.04.87 Patentblatt 87/17

(84) Benannte Vertragsstaaten:
AT BE CH DE FR GB IT LI LU NL SE

(71) Anmelder: Kunststoff-Verarbeitungs GmbH Dirk A.
Brügmann
Werkzeugstrasse 18
D-5800 Hagen-Halden(DE)

(72) Erfinder: Brügmann, Dirk
Dorf Reingsen
D-5840 Schweter 4(DE)

(74) Vertreter: Patentanwälte Müller-Boré, Deufel, Schön,
Hertel, Lewald, Otto
Postfach 26 02 47 Isartorplatz 6
D-8000 München 26(DE)

(54) Verfahren zur Ermittlung einer proportionalen Veränderung eines Profils.

(57) Bei dem Verfahren zur Ermittlung einer proportionalen Veränderung eines Profils zwischen Düse und Kalibrierung an einer Profilextrusionsstraße mit einem Extruder und einer Abzugseinrichtung wird der Grad der Abschirmung eines Meßstrahles von einem Bereich des Profils zur Regelung der Geschwindigkeit der Abzugseinrichtung oder der Drehzahl des Extruders herangezogen. Je nach stärkerer oder geringerer Überdeckung durch das Profil, d.h. je nachdem ob das Profil im Querschnitt größer oder geringer wird, erfolgt eine Beschleunigung oder Verzögerung der regelbaren Maschinenteile. Zur Vermeidung der Nachregelung nur kurzfristig auftretender Abweichungen kann eine Verzögerungszeit einstellbar sein.

EP 0 218 850 A1

-1-

Die Erfindung betrifft ein Verfahren zur Ermittlung einer proportionalen Veränderung eines aus einer Düse austretenden extrudierten ggf. kalibrierten und abgezogenen Profils.

Zur Ermittlung einer proportionalen Veränderung eines Profils oder der Maßhaltigkeit eines Profils sind berührende und berührungslose Meßverfahren bekannt. Der Vorteil der berührungslosen Meß- und Regelverfahren liegt darin, daß das für ihre Regelung wichtige, profilspezifische Maß schon zwischen Düse und Kalibrierung erfaßt wird. Berührende Meßverfahren erlauben dagegen nur einen Einsatz des Meßsystems an einer Stelle, an der das Extrudat schon soweit erkaltet ist, daß eine Berührung des Profils keine Beschädigung mehr mit sich bringt. Da dies in der Regel hinter der Kühlstrecke der Fall ist, erfolgt eine nicht unbedeutende Regelverzögerung. Fast alle bekannten berührungslosen Meß- und Regelverfahren regeln über eine Geschwindigkeitsänderung des Abzuges oder der Drehzahl des Extruders. Es sind aber auch Systeme bekannt, welche mit Temperaturänderungen des Extruders arbeiten.

Der Erfindung liegt die Aufgabe zugrunde, ein berührungsloses Meßverfahren dahingehend auszugestalten, daß jede proportionale Veränderung eines Profils (Verbreiterung oder Schwächung des Profils) sofort erkannt und zur Regelung herangezogen wird.

Diese Aufgabe wird erfindungsgemäß dadurch gelöst, daß eine Abweichung der geometrischen Abmessungen des Profils von einer Sollabmessung oder eine Abweichung eines an einem Vorrichtungsteil wirkenden Druckes von einem Solldruckwert erfaßt wird und in Abhängigkeit von der Abweichung eine Regelung der Geschwindigkeit einer Abzugseinrichtung oder der Drehzahl oder der Erwärmung eines Extruders erfolgt.

Gemäß einer bevorzugten Ausführungsform ist ein Verfahren, wobei zwischen der Düse eines Extruders und einer Abzugseinrichtung eine Kalibrierung des Profils erfolgt, und wobei über einen Sender ein Signal an einen Empfänger abgegeben wird und zwischen dem Sender und dem Empfänger der zu überwachende Bereich des Profils verläuft, bekannt.

Eine proportionale Veränderung eines Profils wird direkt bei Austritt des Profils aus der Düse erfaßt. Die Signalstrecke mißt dabei die Eintauchtiefe einer Profilkante in einen Signalkegel oder ein Signalbündel. Die in die Meßsignalstrecke eintauchende Profilkante verändert die Ausgangsgröße der Meßstrecke. Je nachdem ob eine Verschmälerung oder Verbreiterung des Profils auftritt, d.h. je nachdem ob die Abzugsgeschwindigkeit in Abhängigkeit von der Ausstoßgröße des Extruders zu hoch oder zu gering ist, weicht das von dem Empfänger aufgefangene Signal nach oben oder unten von einem Ausgangssignal ab. Mit Hilfe des erfindungsgemäßen Verfahrens kann eine proportionale Veränderung der Profilkante bis in den Bereich eines 1/100 mm erfaßt werden. Mit Hilfe einer geeigneten Regelelektronik wird die Meßgröße zur Regelung der Abzugsgeschwindigkeit oder der Drehzahl des Extruders verwendet.

Gemäß einer bevorzugten Ausführungsform wird in der Normalstellung das Signalbündel oder der Meßstrahl etwa zur Hälfte von dem Profil abgeschirmt, so daß die Meßgröße auf ihrem Mittelwert eingestellt wird. Solange die proportionale Veränderung des Profils sich in dem eingestellten Toleranzbereich der Grundschwingung des Profils von 1/10 bis 2/10 mm bewegt, erfolgt keine Regelung, da keine Veränderung erfaßt wird. Dieser Mittelwert entspricht dem Soll-Wert, von dem aus die entsprechenden Abweichungen in der Stärke (Abnahme oder Zunahme) erfaßt werden. Dazu wird ständig der Ist-Wert der Meßgröße mit dem Soll-Wert der Meßgröße verglichen und aus der Abweichung wird die Regelgröße bestimmt.

Gemäß bevorzugten Ausführungsformen wird als Signalstrecke eine Lichtstrom-Meßstrecke, eine Infrarotstrecke oder dergleichen verwendet. Um störende Einflüsse auszuschalten, wird bei der Messung das Gleichfeldumlicht eliminiert.

Gemäß einer anderen bevorzugten Ausführungsform des erfindungsgemäßen Verfahrens wird der auf die Kalibrierungsvorrichtung über das Profil ausgeübte Druck erfaßt und zur Regelung herangezogen. Wenn die Abzugsgeschwindigkeit zu hoch oder die Drehzahl des Extruders zu gering ist, erfolgt ein Materialstau vor der Kalibrierung und der auf die Kalibrierung ausgeübte Druck, der vorzugsweise über eine zwischen der Kalibrierung und einem Widerlager angeordnete Druckdose ermittelt wird, nimmt einen zu geringen Wert an. Damit verbunden ist eine Ausbildung des Profils mit zu geringen Abmessungen, so daß eine Verringerung der Abzugsgeschwindigkeit und/oder eine Erhöhung der Drehzahl des Extruders erfolgen muß.

Bei der Herstellung beispielsweise von Profilen aus PVC-Schaum wird gemäß einer weiteren bevorzugten Ausführungsform der Staudruck des zu extrudierenden Materials kurz vor Austritt aus der Düse beispielsweise über einen Druckfühler ermittelt und als Regelgröße verwendet. Ist der Druck größer als der Soll-Wert, kann das Profil stärker als gewünscht extrudieren; die Drehzahl des Extruders muß verringert werden. Ist der Druck geringer als der Soll-Wert, muß die Drehzahl des Extruders erhöht werden, damit die gewünschten Profilabmessungen erreicht werden.

Da eine Abweichung von dem Soll-Wert aber nur sehr kurzfristig auftreten kann, die evtl. durch Unreinheiten im Material hervorgerufen wird, erfolgt die Ausführung der Regelung vorzugsweise nach einer Verzögerungszeit. Erst nach Verstreichen dieser Verzögerungszeit erfolgt eine Korrektur der Ausgangsstellgröße. Gemäß einer bevorzugten Ausführungsform ist die Verzögerungs- und/oder Korrekturzeitgröße manuell einstellbar.

In Weiterbildung der Erfindung nimmt die Elektronik eine progressive Anpassung der Verzögerungs- und Korrekturzeitwerte in Abhängigkeit von der Überschreitungsgröße des Ist-Wertes vor. Dies bedeutet, daß mit größer werdender Signalabweichung, d.h. mit größer werdendem Unterschied des Ist-Signals vom Soll-Signal, der Korrekturwert größer und die Verzögerungszeit kleiner werden.

Zur Ausführung des Verfahrens wird das Ausgangssignal des Empfängers, d.h. der Ist-Meßwert, an eine Regelelektronik abgegeben. Der aus der Ausgangsgröße gewonnene Meßwert ist dabei mittels Offset-Kompensation in seiner Null-Lage verschiebbar. Damit ist eine elektronische Verstellung der Nullpunktlage möglich, so daß eine nachträgliche Feineinstellung der Maße und des Gewichtes des Profils erfolgen kann. Während der Herstellung des Profils, d.h. während dessen Laufs von der Düse durch die Kalibrier-, Kühl- und Abzugseinrichtung ist die Feinveränderung der Maße sowie des Gewichtes des Profils möglich. Darüber hinaus wird bei dem erfindungsgemäßen Verfahren die Möglichkeit geschaffen, bei einer länger dauernden abnormalen Überschreitung des maximal vorwählbaren Soll-Wertes, was einem kritischen Betriebszustand gleichkommt, ein auswertbares Signal zur Verfügung zu stellen.

Ferner wird die Möglichkeit geschaffen, relative Veränderungen des Materialausstoßes zu erfassen. Dies erfolgt dadurch, daß zum Zeitpunkt der Umschaltung von Hand- auf Automatikbetrieb der registrierte Materialausstoß relativ zu jeder der vorwählbaren nachgemessenen Veränderungen erfaßt wird. Nach Verstreichen einer prozentualen Abweichung und einer bestimmten Zeit wird ein Ausgangssignal zur Verfügung gestellt.

-5-

Das erfindungsgemäße Verfahren kann mit einer Vorrichtung betrieben werden, die ausgehend von einer Lichtquelle einen Lichtmeßstrahl erzeugt, der von einem lichtempfindlichen Element aufgefangen und in ein geeignetes Signal umgesetzt wird, das der Regelelektronik zugeführt wird. Bei der Regelung eines Profils wird der Materialfluß an einer festgelegten Profilecke zwischen der Düse und der Kalibrierung mit dem Meßstrahl überwacht und nach dem Ausrichten des Meßkopfes auf das richtige Profilmaß wird der Meßstrahl durch Einschalten der elektronischen Steuerung im Regelgerät konstant gehalten, indem die Abzugsgeschwindigkeit über das Regelgerät gesteuert wird. Das Regelgerät verfügt dabei vorzugsweise über einen verstellbaren Toleranzbereich.

Die aus der Regelelektronik ausgegebene Ansteuerspannung für den Extruder oder den Abzug kann vorzugsweise aufgrund der gemessenen Profilkante auf den jeweils optimalen Wert nachgeführt werden.

Bei einer Überschreitung des vorgewählten Toleranzwertes wird ein Korrekturimpuls zur Veränderung der Ansteuerspannung abgegeben. Dieser Korrekturimpuls verändert die Ansteuerspannung um den Betrag $\Delta U$, wobei die Veränderung mit der Länge des Korrekturimpulses variiert.

In der Praxis werden für den Abzug im allgemeinen Raupenabzüge eingesetzt, die mit einer Ansteuerspannung von z.B. 10 Volt arbeiten, wobei je nach Dimensionierung des Antriebes max. Abzugsgeschwindigkeiten zwischen ca. 3 m/min und 300 m/min erreicht werden.

Wird bei der Regelung der Extrusionsstrecke nun immer mit einer konstanten Veränderung $\Delta U$ in Abhängigkeit der Soll-Wert-Überschreitung gearbeitet, ist in der Praxis nicht für alle Fälle ein optimales Regelverhalten gewährleistet.

Daher wird vorzugsweise die Steilheit der Verstellgröße von

$\Delta$ U den jeweils gegebenen Anforderungen angepaßt, und es stehen mehrere Kurvenscharen der Ansteuerspannung zur Verfügung. Vorzugsweise kann zwischen einer Vielzahl verschiedener Steilheiten gewählt werden, die jeweils noch einmal intern feinabgeglichen werden können, je nach erforderlichem Einsatzfall.

Bei einer Über- bzw. Unterschreitung der vorgewählten Toleranzwerte erfolgte bisher eine Korrektur der Ansteuerspannung in die jeweils erforderliche Richtung, und zwar so lange wie die Ist-Größe größer als die Soll-Größe war. Dies konnte dazu führen, daß aufgrund der Korrekturimpulse bei rückläufiger Überschreitungsgröße kurz vor Erreichen des Soll-Wertes noch Korrekturimpulse abgegeben werden konnten, was unter Umständen zu einem Überschwingen der Regelung führen konnte.

In Weiterbildung der Erfindung werden nur Korrekturimpulse abgegeben, wenn die Ist-Wert-Größe außerhalb der Soll-Wert-Größe ansteigt oder stagniert. Bei rückläufiger Ist-Wert-Größe, also hin zum Soll-Wert, werden die Korrekturimpulse unterbunden, so daß ein Überschwingen der Regelung vermieden wird.

Es ist möglich, über eine Leuchtskala die momentane Profilschwankung abzulesen, um mit einem Blick festzustellen, ob sich die Abmessungen des Profilquerschnitts gerade über, unter oder im Toleranzbereich bewegen. Ferner ist es möglich, die Ansprechverzögerung des Regelgerätes stufenlos einzustellen, um auszuschließen, daß eine nur kurzzeitig auftretende Schwankung, die beispielsweise durch eine Verunreinigung des Materials hervorgerufen wird, sofort einen Regelvorgang auslöst, der selbst eine ungewollte Veränderung des Profils bewirken würde. Um stark schwankende Profile schneller wieder in den eingestellten Toleranzbereich zurückzuführen, ist es möglich, die Impulslänge des Regelvorganges stufenlos zu verändern.

Über die Elektronik erfolgt eine progressive Regelung, deren Voreinstellung linear durchgeführt wird. Dies bedeutet, daß bei einem Profil, das weit aus dem eingestellten Toleranzbereich hinausläuft, die Impulslänge automatisch verlängert wird, um so ein schnelles Zurückführen des Profils in den Bereich der Maßhaltigkeit zu ermöglichen.

Ferner kann die Korrekturzeitlänge über die Regelelektronik derart bemessen werden, daß eine Korrektur über den Sollwert hinaus vermieden und ein schnelles Einpendeln auf den Soll- wert erreicht wird.

1

Kunststoff-Verarbeitung GmbH Dirk A. Brügmann,
Werkzeugstr. 18, 5800 Hagen-Halden


## Verfahren zur Ermittlung einer proportionalen Veränderung eines Profils

### Ansprüche

1. Verfahren zur Ermittlung einer proportionalen Veränderung
   eines aus einer Düse austretenden extrudierten ggf.
   kalibrierten und abgezogenen Profils, dadurch g e -
   k e n n z e i c h n e t , daß eine Abweichung der
   geometrischen Abmessungen des Profils von einer Sollabmessung oder eine Abweichung eines an einem Vorrichtungsteil wirkenden Druckes von einem Solldruckwert erfaßt wird und in Abhängigkeit von der Abweichung
   eine Regelung der Geschwindigkeit einer Abzugseinrichtung oder der Drehzahl oder der Erwärmung eines
   Extruders erfolgt.

2. Verfahren nach Anspruch 1, wobei zwischen der Düse eines Extruders und einer Abzugseinrichtung eine Kalibrierung des Profils erfolgt, und wobei über einen Sender ein Signal an einen Empfänger abgegeben wird und zwischen dem Sender und dem Empfänger der zu überwachende Bereich des Profils verläuft, dadurch g e k e n n z e i c h n e t , daß über die Signalstrecke zwischen Sender und Empfänger die Eintauchtiefe einer Profilkante erfaßt und in Abhängigkeit von der Größe der Abdeckung eines Meßstrahls oder eines Signalbündels die Regelung der Geschwindigkeit der Abzugseinrichtung oder der Drehzahl des Extruders vorgenommen wird.

3. Verfahren nach Anspruch 2, dadurch g e k e n n - z e i c h n e t , daß in der Normalstellung das Signalbündel etwa zur Hälfte von dem Profil abgeschirmt wird, so daß die Meßgröße auf ihren Mittelwert eingestellt ist.

4. Verfahren nach Anspruch 2 oder 3, dadurch g e k e n n - z e i c h n e t , daß als Signalstrecke eine Lichtstrommeßstrecke verwendet wird.

5. Verfahren nach Anspruch 4, dadurch g e k e n n - z e i c h n e t , daß Gleichfeldumlicht eliminiert wird.

6. Verfahren nach Anspruch 1, dadurch g e k e n n - z e i c h n e t , daß der auf die Kalibrierungsvorrichtung über das Profil ausgeübte Druck erfaßt wird.

7. Verfahren nach Anspruch 6, dadurch g e k e n n - z e i c h n e t , daß der Druck über eine zwischen der Kalibrierung und einem Widerlager angeordnete Druckdose erfaßt wird.

8. Verfahren nach Anspruch 1, dadurch g e k e n n z e i c h - n e t , daß der Staudruck des zu extrudierenden Materials kurz vor Austritt aus der Düse ermittelt wird.

9. Verfahren nach einem der Ansprüche 1 bis 8, dadurch g e k e n n z e i c h n e t , daß ausgehend von dem Soll-Wert die Ist-Größe des Meßwertes mit dem Soll-Wert verglichen und aus der Abweichung die Regelgröße bestimmt wird.

10. Verfahren nach Anspruch 9, dadurch g e k e n n - z e i c h n e t , daß die Ausführung der Regelung nach einer Verzögerungszeit erfolgt.

11. Verfahren nach Anspruch 10, dadurch g e k e n n - z e i c h n e t , daß der Wert der Verzögerungszeit einstellbar ist.

12. Verfahren nach einem der Ansprüche 1 bis 11, dadurch g e k e n n z e i c h n e t , daß in Abhängigkeit von der Überschreitungsgröße des Ist-Wertes eine progressive Anpassung der Verzögerungs- und Korrekturzeitwerte vorgenommen wird.

13. Verfahren nach einem der Ansprüche 1 bis 12, dadurch g e k e n n z e i c h n e t , daß das Ausgangssignal des Empfängers an eine Regelelektronik gegeben wird.

14. Verfahren nach einem der Ansprüche 1 bis 13, dadurch g e k e n n z e i c h n e t , daß der aus der Ausgangsgröße gewonnene Meßwert mittels Offset-Kompensation in seiner Null-Lage zur nachträglichen Feineinstellung der Maße und des Gewichtes des Profils verschiebbar ist.

15. Verfahren nach einem der Ansprüche 1 bis 14, dadurch g e k e n n z e i c h n e t , daß die Korrekturzeitlänge zur Vermeidung eines Aufschaukelns veränderbar ist.

16. Verfahren nach einem der Ansprüche 1 bis 15, dadurch g e k e n n z e i c h n e t , daß die aus der Regelelektronik ausgegebene Ansteuerspannung für den Extruder oder die Abzugseinrichtung auf den optimalen Wert nachgeführt wird.

17. Verfahren nach einem der Ansprüche 1 bis 16, dadurch g e k e n n z e i c h n e t , daß bei einer Überschreitung eines vorgegebenen Toleranzwertes ein Korrekturimpuls zur Veränderung der Ansteuerspannung abgegeben wird.

18. Verfahren nach Anspruch 17, dadurch g e k e n n - z e i c h n e t , daß die Veränderung der Ansteuerspannung mit der Länge des Korrekturimpulses variiert.

19. Verfahren nach einem der Ansprüche 16 bis 18, dadurch g e k e n n z e i c h n e t , daß die Steilheit der Verstellgröße der Veränderung der Ansteuerspannung auswählbar ist.

20. Verfahren nach Anspruch 19, dadurch g e k e n n - z e i c h n e t , daß die Auswahl aus einer Vielzahl von verschiedenen Steilheiten erfolgt.

21. Verfahren nach einem der Ansprüche 1 bis 20, dadurch g e k e n n z e i c h n e t , daß Korrekturimpulse nur abgegeben werden, wenn die Ist-Wert-Größe außerhalb der Soll-Wert-Größe ansteigt oder stagniert.

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | FR-A-2 143 072 (E.I. DU PONT DE NEMOURS AND CO.) <br><br> * Ansprüche; Abbildungen 1-3 * | 1-5,8-10,13,14,16,17 | B 29 C 47/92 <br> G 05 D 5/03 |
| X | FR-A-2 256 019 (INSTITUTE FOR INDUSTRIAL RESEARCH AND STANDARDS) <br> * Ansprüche 1-4; Abbildung; Seite 6, Zeilen 6-12 * | 1-5,9,10,13-18,21 | |
| X | DE-A-2 507 186 (BASF AG) <br> * Ansprüche; Abbildung * | 1,8 | |
| X | FR-A-2 304 952 (LESIEUR-COTELLE ET ASSOCIES) <br><br> * Ansprüche 1,2; Abbildung * | 1,9,10,13-17,21 | **RECHERCHIERTE SACHGEBIETE (Int. Cl.4)** <br><br> B 29 C <br> G 05 D |
| X | GB-A- 744 925 (THE ADDISON ELECTRIC CO. LTD.) <br> * Ansprüche 1-7 * | 1,9-12 | |
| X | EP-A-0 089 060 (SHOWA ELECTRIC WIRE & CABLE CO. LTD.) <br> * Anspruch 1 * | 1,8,9 | |

--- -/-

Der vorliegende Recherchenbericht wurde für alle Patentansprüche erstellt.

| Recherchenort <br> DEN HAAG | Abschlußdatum der Recherche <br> 10-12-1986 | Prüfer <br> BELIBEL C. |
|---|---|---|

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | STAHL UND EISEN, Band 97, Nr. 19, 22. September 1977, Seiten 921-926; R. STELZER: "Untersuchung von Verfahren zur Walzkraftmessung" * Abbildung 1 * | 6,7 | |
| A | US-A-4 136 307 (B.J. SCOTT) * Ansprüche * | 19,20 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 10-12-1986 | BELIBEL C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82